# EUROPEAN PATENT APPLICATION

(11) **EP 2 366 878 A2**
(43) Date of publication of application: **21.09.2011**
(21) Application number: 11157600.5
(22) Date of filing: 10.03.2011
(51) Int. Cl.: F01P 7/16

(54) **Thermostat for regulating the temperature of a medium which circulates in a system**

(30) Priority: 16.03.2010 SE 1050236
(71) Applicant: Scania CV AB, 151 87 Södertälje (SE)
(72) Inventor: Kardos, Zoltan, 151 35, Södertälje (SE); Söderberg, Erik, 111 29, Stockholm (SE)

(57) **Abstract**

The present invention relates to a thermostat for regulating the temperature of a medium which circulates in a system. The thermostat comprises a valve body (14) adapted to being movable between a first position and a second position, and a sensing element (16) adapted to being fitted at a temperature-detecting location (11) in the system in contact with the circulating medium. The sensing element (16) comprises a casing (17) made of rigid material and containing a substance (18) which is adapted to changing phase and therefore volume at a regulating temperature of the thermostat. A motion-transmitting mechanism (15) is adapted to transmitting motion from said substance (18) to the valve body (14) so that the valve body (14) moves between the first position and the second position when the substance (18) changes phase. The casing (17) comprises at least one outward-protruding heat-transferring element (19, 29) which has an external surface which serves as an extra contact surface between the casing (17) and said medium.

## Description

### BACKGROUND TO THE INVENTION AND PRIOR ART

The present invention relates to a thermostat for regulating the temperature of a medium which circulates in a system according to the preamble of claim 1.

Thermostats which comprise sensing elements with wax elements are inexpensive and operationally reliable. Such thermostats are used, for example, in vehicles to regulate the temperature of the coolant in the cooling system which cools the vehicle's combustion engine. The sensing element comprises a metal casing made of, for example, brass which surrounds the wax element. The thermostat is situated at a suitable point in the cooling system where the sensing element is in contact with the coolant. When the coolant reaches the thermostat's regulating temperature, the wax element melts, thereby increasing in volume, and the melted wax moves a valve body so that the thermostat directs the circulating coolant to a radiator which may be situated at a front portion of a vehicle where the coolant is cooled by surrounding air which flows through the radiator.

When the coolant temperature in the cooling system drops below the regulating temperature, the wax element reverts to a solid state and reduced volume, causing the valve body to move to a position in which the thermostat prevents the coolant from reaching the radiator. During operation of a combustion engine, its cooling requirement varies with, inter alia, the instantaneous load. When the cooling requirement varies, it is important that the thermostat can be reset quickly so that the coolant can maintain a substantially constant desired temperature. However, the phase transformation of a wax element between a solid state and a liquid state is relatively slow, which means that with a conventional thermostat which contains a wax element the temperature regulation of the coolant is relatively slow.

A known way of increasing the regulating speed of thermostats with wax elements is to incorporate metal particles in the wax element. When the coolant is at a higher temperature than the melting point of the wax element, the metal particles conduct heat from the coolant to the various parts of the wax element so that the wax melting process is accelerated. When the coolant is at a lower temperature than the melting point of the wax element, the metal particles conduct heat from the wax element to the coolant so that the wax solidification process is accelerated.

### SUMMARY OF THE INVENTION

The object of the present invention is to propose a thermostat with a sensing element which comprises a phase-transforming substance, thereby providing a relatively simple and effective way of achieving rapid thermostat regulation.

This object is achieved with the arrangement of the kind mentioned in the introduction which is characterised by the features indicated in the characterising part of claim 1. Causing a substance to undergo a phase transformation entails transferring a relatively large amount of thermal energy in the form of latent heat to or from the phase-transforming substance. Conventional thermostats with sensing elements which contain phase-transforming substances are relatively slow because the heat transfer between the medium and the phase-transforming substance does not take place effectively enough. According to the present invention, a casing containing the phase-transforming substance is provided with heat-transferring elements which protrude outwards. Such outward-protruding heat-transferring elements provide extra contact surfaces between the casing and the medium, facilitating the heat transfer between the medium and the phase-transforming substance which is within the casing. The transfer of the relatively large amount of thermal energy required to phase-transform the substance can therefore take place more quickly, resulting in faster thermostat regulation.

According to an embodiment of the invention, said outward-protruding heat-transferring elements are so arranged as to provide extra contact surfaces which have a substantially parallel extent with the direction of flow of the circulating medium at the temperature-detecting location. This means that the circulating medium can flow along the contact surfaces of the outward-protruding elements and undergo effective heat exchange, substantially without being retarded by the contact surfaces. The presence of one or more such outward-protruding heat-transferring elements therefore causes only small pressure losses of the circulating medium. Said outward-protruding heat-transferring elements may be elongate and of substantially rectilinear extent, in which case the medium can flow along a relatively elongate contact surface of the protruding element, resulting in effective heat transfer. The casing comprises with advantage a plurality of such elongate heat-transferring elements disposed at suitable spacing round the periphery of the casing. Alternatively, said outward-protruding heat-transferring elements may be annular and extend round the casing. The casing preferably comprises a plurality of such annular protruding elements which may be pressed firmly round the casing during a manufacturing process.

According to another preferred embodiment of the invention, the casing and said outward-protruding heat-transferring elements are made of the same material. For good heat transfer between the medium and the phase-transforming substance, it is important that the casing and said outward-protruding heat-transferring elements be made of material with good heat-conducting characteristics. They are with advantage made of metal material which has good heat-conducting characteristics, e.g. brass, aluminium, copper etc. The casing and said outward-protruding heat-transferring elements may therefore be made of the same material, although it is also possible for them to be made of different materials.

According to another preferred embodiment of the invention, the casing comprises at least one inward-protruding heat-transferring element which has a surface serving as an extra contact surface between the casing and the phase-transforming substance. One or more such inward-protruding heat-transferring elements provide extra contact surfaces between the casing and the phase-transforming substance, further facilitating the heat transfer between the casing and the phase-transforming substance. The transfer of the amount of thermal energy required to phase-transform the substance can therefore take place more quickly, resulting in faster thermostat regulation.

According to another preferred embodiment of the invention, the thermostat comprises a warming element which is situated adjacent to the sensing element and by which the regulating temperature of the thermostat is adjustable. The warming element is with advantage an electrical warming element. Such a warming element makes it possible for thermal energy to be supplied to the phase-transforming substance in certain operating situations. During such situations, the phase-transforming substance may be caused to melt when the medium is at a lower temperature than the phase transformation temperature of the substance. Such a warming element makes it possible for the regulating temperature of the thermostat to be adjusted downwards in an appropriate step.

According to another preferred embodiment of the invention, said substance is a wax substance. Many wax substances have a melting temperature within the range of 60-100°C. Systems with a warm circulating medium which contains water very often have a desired temperature within this range. Choosing a suitable wax substance which may incorporate additive substances makes it possible substantially always to provide a phase-transforming substance with a suitable melting temperature for such systems. The thermostat may with advantage be situated in a cooling system with a circulating coolant for cooling a combustion engine, in which case maintaining a coolant temperature within the range 70-90° is usually desired.

### BRIEF DESCRIPTION OF THE DRAWINGS

Preferred embodiments of the invention are described below by way of examples with reference to the attached drawings, in which:
- Fig. 1: depicts a cooling system for a combustion engine with a thermostat according to the present invention,
- Fig. 2: depicts the thermostat in Fig. 1 in more detail,
- Fig. 3: depicts a cross-sectional view in the plane A-A through a sensing element of the thermostat in Fig. 2,
- Fig. 4: depicts a thermostat according to another embodiment and
- Fig. 5: depicts a cross-sectional view in the plane B-B through a sensing element of the thermostat in Fig. 4.

### DETAILED DESCRIPTION OF PREFERRED EMBODIMENTS OF THE INVENTION

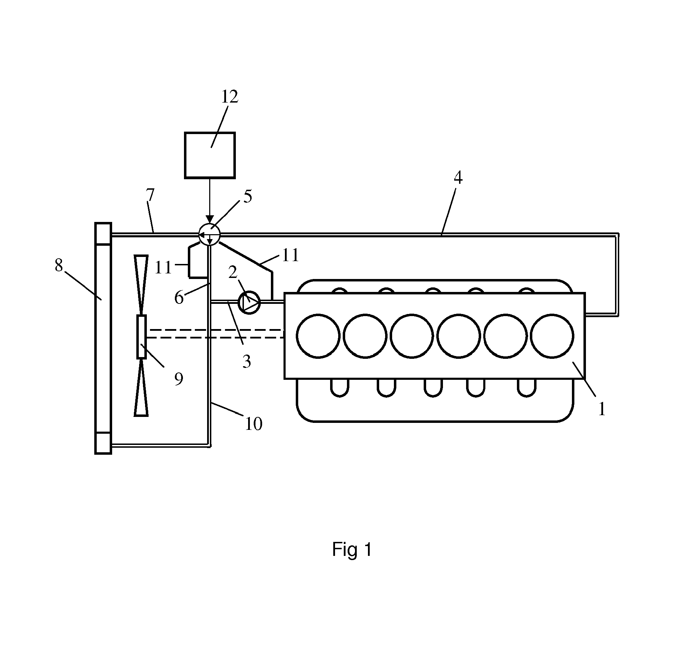

Fig. 1 depicts a cooling system for cooling a combustion engine 1. The coolant is circulated in the cooling system by a coolant pump 2 situated in an inlet line 3 to the combustion engine 1. After it has circulated through, and has cooled, the combustion engine 1, the coolant is led through a line 4 to a thermostat 5. In situations where the coolant is at a lower temperature than a desired operating temperature, the thermostat 5 directs the coolant to a return line 6 which is connected to the inlet line 3. In situations where the coolant is at a higher temperature than the desired operating temperature, the thermostat directs the coolant to a line 7 and a radiator 8 which may be fitted at a forward portion of a vehicle. A radiator fan 9 draws a cooling air flow through the radiator 8 so that the coolant undergoes effective cooling in the radiator 8. After it has been cooled in the radiator 8, the coolant is led back to the inlet line 3 via a return line 10.

The system comprises a pilot line 11 which leads coolant from the inlet line 3 to the thermostat 5. The coolant in the pilot line is thereafter led back to the inlet line 3 via the return line 6. Coolant led to the thermostat 5 via the pilot line 11 is at the same temperature as the coolant which is led into the combustion engine 1. The thermostat 5 detects in this case the temperature of the coolant which is led into the combustion engine 1, which is a more relevant guide temperature than the temperature of the coolant which is led out from the combustion engine 1. A control unit 12 is connected to the thermostat 5. The control unit 12 may use information from, for example, appropriate engine parameters as a basis for varying the temperature at which the thermostat 5 opens.

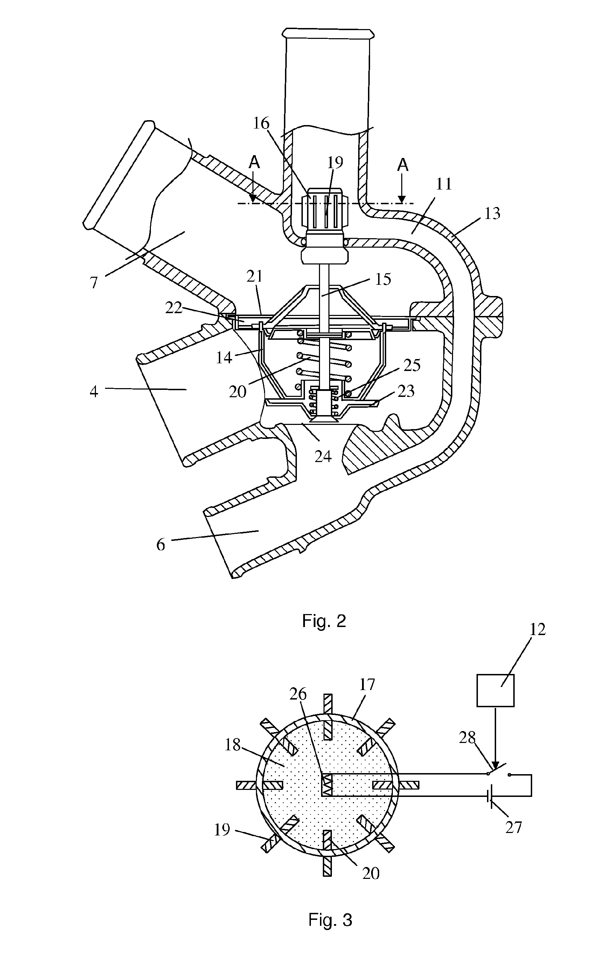

Fig. 2 depicts the thermostat 5 in more detail. The thermostat 5 is situated in a housing 13 which has connections which are connectable to the lines 4, 6, 7 and 11. The thermostat 5 comprises a valve body 14 fastened on a rod 15. The rod 15 has an upper end portion fastened within a sensing element 16. The sensing element 16 is situated in a fixed position at a suitable location in the pilot line 11. The coolant flows in this embodiment in a substantially vertical direction adjacent to the sensing element 16.

Fig. 3 depicts a sectional view through the sensing element 16. The sensing element 16 comprises a casing 17 made of rigid thin-walled material which is with advantage metal material with good heat-conducting characteristics. The casing 17 has an internal space surrounding a wax substance 18 which has the characteristic of changing phase from a solid state to a liquid state at a temperature which corresponds to a regulating temperature of the thermostat 5. When the wax substance 18 is in a liquid state, it has a markedly larger volume than in the solid state. The casing 17 is of substantially cylindrical shape with a plurality of outward-protruding heat-transferring elements 19. The outward-protruding heat-transferring elements 19 are in this case elongate and straight and are disposed at uniform intervals round the external surface of the casing 17. The contact surfaces of each of the outward-protruding heat-transferring elements 19 have a main extent in a vertical plane and therefore have a substantially parallel extent with the vertical direction of coolant flow adjacent to the sensing element 16. The heat-transferring elements 19 provide the casing 17 with a relatively large external contact surface with the coolant, facilitating the heat exchange between the coolant and the wax substance 18 within the casing 17. As the contact surfaces of the outward-protruding heat-transferring elements 19 extend in the direction of coolant flow, they substantially do not retard the flow of coolant in the pilot line 11. The pressure losses of the coolant in the pilot line 11 adjacent to the sensing element 16 thus become slight.

To further facilitate the heat exchange between the coolant and the wax substance 18, the casing 17 is also provided with a plurality of inward-protruding heat-transferring elements 20. The heat-transferring elements 20 protrude into the wax substance 18 from the internal surface of the casing 17. The inward-protruding heat-transferring elements 20 are likewise elongate and straight and are disposed at uniform intervals round the internal surface of the casing 17. The casing 17 is thus likewise provided with a large internal contact surface with the wax substance 18. Such outward-protruding heat-transferring elements 19 and inward-protruding heat-transferring elements 20 result in very good heat transfer between the coolant and the wax substance 18 within the casing 17. The casing 17 and said heat-transferring elements 19, 20 are with advantage made of metal material with very good heat-conducting characteristics, e.g. aluminium, copper or brass. The casing 17 and said heat-transferring elements 19, 20 may be made of different such materials or of one and the same material.

The casing 17 has rigid walls which surround the wax substance 18 in all directions except one, which in this case is downwards. When the wax substance 18 melts and increases in volume, it can therefore only expand downwards within the casing 17. When the wax substance increases in volume, there is no longer room for the rod, which is thus caused to move likewise downwards in the casing 17. A flexible membrane or the like may be placed between the wax and the rod 15 to define a lower surface of the wax substance 18 within the casing 17. Converting the change of volume of the wax substance 18 within the casing 17 to linear motion of the rod 15 is prior art and may be done in various different ways. The valve body 14 comprises a return spring 20 adapted to pushing the rod 15 and the valve body 14 upwards when the wax substance 18 solidifies and occupies a reduced volume within the casing 17. The return spring 20 exerts a resilient force on the rod 15 which is not to so great as to prevent downward movement of the rod 15 and the valve body 14 when the wax substance 18 melts and expands within the casing 17. The valve body 14 comprises a first valve disc 21 adapted to closing an aperture 22 between the line 4 and the line 7 when the valve body 14 is in an upper first position as depicted in Fig. 3. The valve body 14 comprises a second valve disc 23 adapted to closing an aperture 24 between the line 4 and the return line 6 when the valve body 14 is in a lower second position. The second valve disc 23 is clamped relative to the rod 15 by a spring 25.

An electrical warming element 26 is situated in the wax substance 18 within the casing 17. The warming element 26 may be activated by means of an electric circuit which comprises a schematically depicted voltage source 27 and a circuit-breaker 28. The control unit 12 is adapted in appropriate situations to closing the circuit-breaker 28 so that electrical energy is led from the voltage source 27 to the warming element 26, which thus warms the wax substance 18 within the casing 17. Such a warming element 26 makes it possible for the control unit 12 to adjust the thermostat's regulating temperature.

During operation of the combustion engine 1, the coolant pump 2 circulates coolant through the system. For optimum cooling of the combustion engine 1, coolant led to it needs to be at a specific temperature. A small part of the coolant flow in the inlet line 3 is therefore led not to the combustion engine 1 but through the pilot line 11. The coolant led through the pilot line 11 is therefore at the same temperature as the coolant led into the combustion engine 1. The coolant in the pilot line 11 flows past the sensing element 16. In situations where the coolant in the pilot line 11 is at a lower temperature than the thermostat's regulating temperature, i.e. the melting point of the wax substance, the wax substance 18 within the casing 17 is in a solid state and therefore occupies a minimum volume within the casing 17. The return spring 20 therefore keeps the rod 15 and the valve body 14 in the upper position at which the first valve disc 21 closes the aperture 22 but the second valve disc 23 opens the aperture 24. The coolant coming from the combustion engine and the line 4 is led in this case to the return line 6. The coolant is led thereafter to the inlet line 3 and the combustion engine 1. In this case the coolant therefore undergoes no cooling in the radiator 8.

When it is not cooled in the radiator, the temperature of the coolant in the cooling system usually rises. The wax substance 18 begins to melt once the coolant temperature in the pilot line 11 rises above the regulating temperature, but quite a lot of thermal energy needs to be applied to melt it. Said heat-transferring elements 19, 20 may be used to transfer the necessary thermal energy relatively quickly from the coolant to the wax substance 18 within the casing 17. When the wax substance melts, it increases in volume and expands downwards in the casing 17, with the result that the rod 15 and the valve body 14 move downwards. When substantially the whole of the wax substance 18 has melted, the valve body 14 reaches the lower position at which the second valve disc 23 closes the aperture 24. When the valve body 14 reaches this position, the first valve disc 21 will have opened the aperture 22. The spring 25 allows a certain continued expansion downwards of the rod 15 relative to the valve body 14. The coolant which comes from the combustion engine and the line 4 is led in this case to the line 7 which leads the coolant to the radiator 8. The coolant is cooled in the radiator 8 by surrounding air before being led to the inlet line 3 and the combustion engine 1 via the line 10.

In situations where the coolant temperature in the pilot line 11 drops below the regulating temperature, the wax substance begins to solidify within the casing 17. The volume of the wax substance 18 within the casing 17 decreases and the return spring 20 pushes the rod 15 and the valve body 14 upwards. When substantially the whole of the wax substance 18 has solidified, the first valve disc 21 reaches the upper position at which it closes the aperture 22 while at the same time the second valve disc 23 opens the aperture 24. The coolant is thus prevented from being cooled in the radiator 8 so that the coolant temperature can be raised. The valve body 14 may be so dimensioned that at positions between the abovementioned extreme positions it allows circulation of the coolant from the line 4 to both the line 6 and the line 7 in suitable proportions. If the control unit 12 decides that it is appropriate to lower the regulating temperature and hence the coolant temperature in the cooling system, it activates the electrical warming element 26. With advantage, the warming element 26 may provide a variable warming effect depending on how far the control unit 12 intends to lower the regulating temperature.

Said heat-transferring elements 19, 20 are thus used to effect very good heat transfer between the coolant in the pilot line 11 and the wax substance 18 in the casing 17. The wax substance thus reaches relatively quickly the same temperature as the coolant in the pilot line 11. Achieving a phase transformation of a substance thus requires a relatively large amount of thermal energy to be conveyed to or from the wax substance 18. The good heat transfer between the wax substance 18 and the coolant which is effected by said heat-transferring elements 19, 20 makes it possible for said relatively large amount of heat to be applied or removed relatively quickly. The wax substance 18 may therefore change phase relatively quickly, resulting in correspondingly rapid thermostat regulation. The cooling system can thus lead coolant at a substantially constant desired temperature to the combustion engine 1 even in operating situations where the cooling requirement of the combustion engine 1 varies.

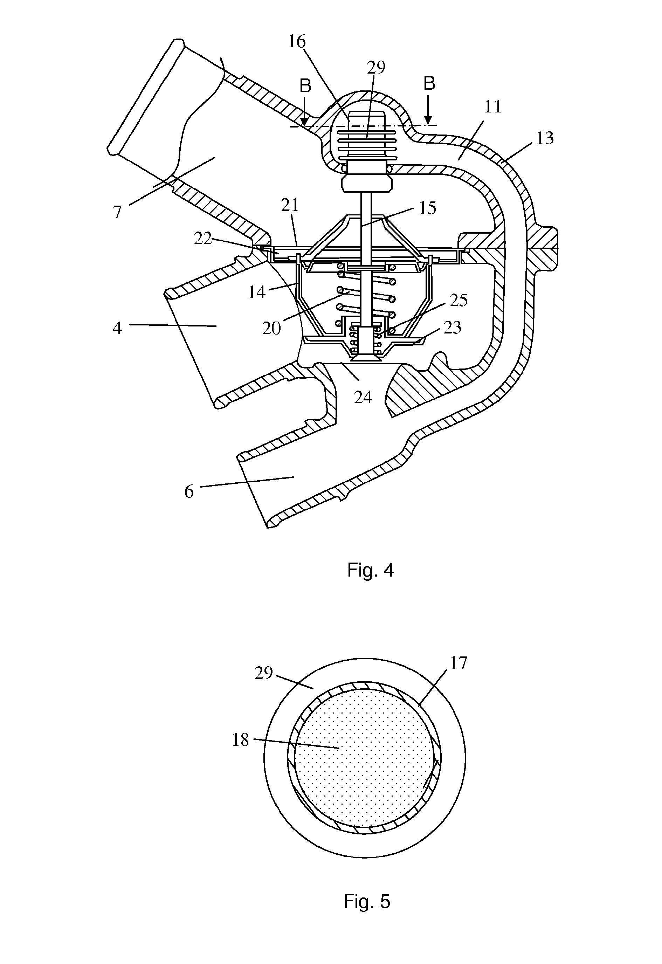

Figs. 4 and 5 depict an alternatively configured sensing element 16. Here again, the sensing element 16 comprises a casing 17 containing a wax substance 18. The coolant flows in this case in a substantially horizontal direction in the pilot line 11 adjacent to the sensing element 16. The casing 17 is of substantially cylindrical shape with a plurality of outward-protruding annular heat-transferring elements 29 which extend round the periphery of the casing 17 and have an extent in a substantially horizontal plane. The contact surfaces of the annular heat-transferring elements 29 therefore have a substantially parallel extent with the mainly horizontal direction of flow of the circulating coolant in the pilot line 11. Such outward-protruding heat-transferring elements 29 result in good heat transfer between the coolant and the wax substance 18 within the sensing element 16. Here again the result is relatively quick phase transformation of the wax substance 18 and rapid regulation of the thermostat.

The invention is in no way limited to the embodiments to which the drawings refer but may be varied freely within the scopes of the claims.

## Claims

1. A thermostat for regulating the temperature of a medium which circulates in a system, which thermostat comprises a valve body (14) adapted to being movable between a first position whereby the circulating medium is led from a line (4) to a first outlet line (6) and a second position whereby the circulating medium is led from the line (4) to a second outlet line (7), a sensing element (16) adapted to being fitted at a temperature-detecting location (11) in the system in contact with the circulating medium, which sensing element (16) comprises a casing (17) which is made of rigid material and which contains a substance (18) adapted to changing phase and therefore volume at a regulating temperature of the thermostat, and a motion-transmitting mechanism (15) adapted to transmitting motion from said substance (18) to the valve body (14) so that the valve body (14) moves between the first position and the second position when the substance (18) changes phase and therefore volume within the casing (17), **characterised in that** the casing (17) comprises at least one outward-protruding heat-transferring element (19, 29) which has an external surface which serves as an extra contact surface between the casing (17) and said medium.

2. A thermostat according to claim 1, **characterised in that** said outward-protruding heat-transferring element (19, 29) is so arranged as to provide extra contact surfaces which have a substantially parallel extent with the direction of flow of the circulating medium at the temperature-detecting location (11).

3. A thermostat according to claim 1 or 2, **characterised in that** said outward-protruding heat-transferring element (19) is elongate and has a substantially rectilinear extent.

4. A thermostat according to claim 1 or 2, **characterised in that** said outward-protruding heat-transferring element (29) is annular and extends round the casing (17).

5. A thermostat according to any one of the foregoing claims, **characterised in that** the casing (17) and said outward-protruding heat-transferring element (19, 29) are made of the same material.

6. A thermostat according to any one of the claims 1 to 4 above, **characterised in that** the casing (17) and said outward-protruding heat-transferring element (19, 29) are made of different materials.

7. A thermostat according to any one of the foregoing claims, **characterised in that** the casing (17) comprises at least one inward-protruding heat-transferring element (20) which has a surface which serves as an extra contact surface between the casing (17) and said substance (18).

8. A thermostat according to any one of the foregoing claims, **characterised in that** said substance is a wax substance (18).

9. A thermostat according to any one of the foregoing claims, **characterised in that** the thermostat comprises a warming element (26) which is situated adjacent to the sensing element (16) and by which the thermostat's regulating temperature is adjustable.

10. A thermostat according to any one of the foregoing claims, **characterised in that** the thermostat is adapted to being situated in a cooling system with a circulating coolant for cooling a combustion engine (1).
